# EUROPEAN PATENT SPECIFICATION

(11) **EP 2 957 449 B1**
(45) Date of publication and mention of the grant of the patent: **12.04.2023**
(21) Application number: 15172488.7
(22) Date of filing: 17.06.2015
(51) Int. Cl.: B60L 50/20

(54) **BATTERY-ASSISTED BICYCLE**
BATTERIEUNTERSTÜTZTES FAHRRAD
VÉLO ASSISTÉ PAR UNE BATTERIE

(30) Priority: 20.06.2014 JP 2014127434
(43) Date of publication of application: 23.12.2015
(73) Proprietor: Yamaha Hatsudoki Kabushiki Kaisha, Iwata-shi, Shizuoka 438-8501 (JP)
(72) Inventor: ARIMUNE, Nobuyasu, Iwata-shi, Shizuoka 438-8501 (JP); HATTORI, Yoichiro, Iwata-shi, Shizuoka 438-8501 (JP); KINPARA, Yuki, Iwata-shi, Shizuoka 438-8501 (JP)
(74) Representative: Grünecker Patent- und Rechtsanwälte PartG mbB

(56) References cited:
- EP-A2- 0 738 653
- EP-A2- 2 705 973
- JP-A- 2000 085 675
- JP-A- 2010 120 599
- US-A1- 2002 100 628
- US-A1- 2005 177 285
- Yao Philip: "Cruise Controller User Guide", , 6 October 2009 (2009-10-06), XP055887766, Retrieved from the Internet: URL:www.goldenmotor.com%2Fe-Bike-DIY%2FCru ise%2520Controller%2520User%2520Guide.pdf& clen=738285&chunk=true [retrieved on 2022-02-04]

## Description

The present invention relates to a battery-assisted bicycle that assists the user with the pedal effort by driving force by an electric motor and method for operating a battery-assisted bicycle.

Prior art document EP 0 738 653 A2 discloses an electric power assisted bicycle which is high in convenience owing to provision of a pushed travel mode and superior in driving feeling and realizes a stabilized assistance performance. The electric power assisted bicycle includes a control unit which includes a main control section which in turn includes pedaling discrimination section including leg-power variation amount calculation means, assist discrimination means and delay timer means, and motor driving control means, and a motor driving limitation section.

Prior art document US 2002/0100628 A1 discloses a bicycle having a cruise control system and various components designed to prevent discomfort and fatigue are disclosed. The cruise control bicycle preferably includes a flexion handlebar, a parallel brake lever, a removable bicycle backrest, and an adjustable sun protector that attaches to the backrest.

Prior art document JP 2010-120599 A discloses an electric bicycle having an in-wheel motor and a starting switch, a pedal rotated by stepping it by the foot of the driver; a rotation speed detector for detecting a rotation speed of the pedal; and a rotation pedal driving control means for driving/controlling the in-wheel motor for driving a rear wheel according to the rotation speed of the pedal detected by the rotation speed detector. The electric bicycle is provided with the starting switch to be turned ON by the driver; and a starting switch driving control means for driving/controlling the in-wheel motor so as to rotate it at a constant speed at a low speed when the starting switch is turned ON.

There has been a known battery-assisted bicycle that assists the user with the pedal effort by detecting torque generated at a crankshaft rotating together with the pedals and controlling an electric motor using the detection result.

A battery-assisted bicycle provided with a driving unit including an electric motor and a battery weighs more than a bicycle without a battery-assisting function. When for example the user walks the battery-assisted bicycle rather than riding the vehicle, the user may find it troublesome to move the heavy vehicle. Therefore, in some known battery-assisted bicycles, the electric motor is operated to assist the movement of the battery-assisted bicycle when the user moves the vehicle with no pedal effort.

Appropriate speed for a battery-assisted bicycle varies among users if they walk the battery-assisted bicycle without riding the bicycle. The appropriate speed may change depending on the environment in which the battery-assisted bicycle is used such as the road condition. Therefore, there is a known battery-assisted bicycle that allows the user to arbitrarily adjust the speed at which the user walks the battery-assisted bicycle without riding the battery-assisted bicycle (for example as disclosed by JP 9-263290 A).

JP 9-263290 A discloses a battery-assisted bicycle provided with a single switch used to change its assisted vehicle speed among multiple stages when the user walks the battery-assisted bicycle. In the disclosed battery-assisted bicycle, the number of times of operating the switch and the vehicle speed are associated and a vehicle speed can be selected depending on how many times the switch is operated. However, the vehicle speed must be selected among a predetermined number of vehicle speeds and therefore if the number of set choices is limited, fine assist operation to meet the user's demand may not be achieved. If the number of set vehicle speeds is large, the number of times of operation necessary to select a vehicle speed increases, which would be inconvenient.

JP 9-263290 A also discloses a battery-assisted bicycle that allows its vehicle speed to be raised up to its upper limit as long as a switch for acceleration is operated and has an unlocking switch linked to a brake. However, the user must operate both the acceleration switch and the unlocking switch in order to select a desirable vehicle speed, which makes it cumbersome to select a vehicle speed.

### SUMMARY OF THE INVENTION

The invention is defind by independent claims 1, 2, 5, 6. An object of the invention is to provide a battery-assisted bicycle capable of performing assist that suits the user's preference without increasing the number times of operation to select a vehicle speed when the user walks the battery-assisted bicycle without riding the battery-assisted bicycle.

According to a second aspect, in the first aspect, the operation unit can switchably output one of first and second operation signals. If the first state determiner determines that the battery-assisted bicycle is in the first state and the first operation signal is input from the operation unit, the vehicle speed setter sets a detection result from the vehicle speed detector at the time of input of the first operation signal as a second vehicle speed, a third vehicle speed higher than the second vehicle speed, and a detection result from the vehicle speed detector at time of input of the second operation signal as the first vehicle speed when the second operation signal is input from the operation unit after input of the first operation signal. If the first state determiner determines that the battery-assisted bicycle is in the first state and the first operation signal is input from the operation unit, and the motor controller controls driving of the electric motor so that the vehicle speed is increased from the second vehicle speed to the third vehicle speed after input of the first operation signal and so that the first vehicle speed is maintained after input of the second operation signal when the second operation signal is input from the operation unit after input of the first operation signal.

In the second aspect, the operation unit is operated to input the first operation signal while the battery-assisted bicycle is in the first state, so that the vehicle speed increases from the second vehicle speed to the third vehicle speed at the time of operating the operation unit and thereafter. The operation unit is operated to input the second operation signal while the vehicle speed increases, so that the first vehicle speed as the vehicle speed at the time of operation is maintained. Therefore, when the user walks the battery-assisted bicycle without riding the battery-assisted bicycle, the number of times of operating the operation unit can be reduced and assist that suits the user's preference can be performed.

According to a fourth aspect, in the third aspect, the operation unit can switchably output one of first and second operation signals. If the first state determiner determines that the battery-assisted bicycle is in the first state and the first operation signal is input from the operation unit, the driving force setter sets driving force by the electric motor at the time of input of the first operation signal as second driving force, third driving force more than the second driving force, and driving force by the electric motor at time of input of the second operation signal as the first driving force when the second operation signal is input from the operation unit after input of the first operation signal, and if the first state determiner determines that the battery-assisted bicycle is in the first state and the first operation signal is input from the operation unit, the motor controller controls driving of the electric motor so that the driving force increases from the second driving force to the third driving force after input of the first operation signal and so that the first driving force is output after input of the second operation signal when the second operation signal is input from the operation unit after input of the first operation signal.

In the fourth aspect, the operation unit is operated to input the first operation signal while the battery-assisted bicycle is in the first state, so that the driving force increases from the second driving force to the third driving force at the time of operating the operation unit and thereafter. The operation unit is operated to input the second operation signal while the driving force increases, so that the first driving force as the driving force at the time of operation is maintained. Therefore, when the user walks the battery-assisted bicycle without riding the battery-assisted bicycle, the number of times of operating the operation unit can be reduced and assist that suits the user's preference can be performed.

According to a fifth aspect, in any one of the first to fourth aspects, assist control can be performed while the user walks the battery-assisted bicycle without riding the battery-assisted bicycle.

A sixth aspect further includes, in any one of the first to fourth aspects, a torque detector that detects torque generated by a pedal effort and the first state determiner determines that the first state is attained if the pedal effort is equal to or less than a prescribed value and the vehicle speed is equal to or less than a prescribed value based on detection results from the torque detector and the vehicle speed detector.

In the sixth aspect, the first state determiner can determine whether the first state is attained based on detection results from the torque detector and the vehicle speed detector.

A seven aspect further includes, in any one of the first to fourth aspects, a seat pressure detector that detects pressure applied on a seating surface of a seat, and a seat pressure determiner that determines whether the pressure detected by the seat pressure detector is equal to or less than a prescribed value and the first state determiner determines that the first state is attained if the seat pressure determiner determines that the pressure applied on the seating surface of the seat is equal to or less than the prescribed value.

In the seventh aspect, assist control can be performed while no user is seated on the seat.

### BRIEF DESCRIPTION OF THE DRAWINGS

Fig. 1 is a right side view of a general structure of a battery-assisted bicycle according to a first embodiment.
Fig. 2 is a view of a general structure of a driving unit and a driven sprocket in the battery-assisted bicycle according to the first embodiment.
Fig. 3 is a sectional view taken along line III-III in Fig. 2.
Fig. 4 is an enlarged plan view of a left brake lever attached to a handle.
Fig. 5 is a schematic block diagram showing motive power transmission and signal transmission in the battery-assisted bicycle according to the first embodiment.
Fig. 6 is a block diagram of a general configuration of an assist controller in the battery-assisted bicycle according to the first embodiment.
Fig. 7 is a flowchart for illustrating assist control in the battery-assisted bicycle according to the first embodiment.
Fig. 8 is a flowchart for illustrating assist control when the brake is applied in the battery-assisted bicycle according to the first embodiment.
Fig. 9 is a graph showing changes in the vehicle speed in the assist control in the battery-assisted bicycle according to the first embodiment.
Fig. 10 is a block diagram of a general configuration of an assist controller in the battery-assisted bicycle according to a second embodiment.
Fig. 11 is a flowchart for illustrating assist control in the battery-assisted bicycle according to the second embodiment.
Fig. 12 is a flowchart for illustrating assist control when the brake is applied in the battery-assisted bicycle according to the first embodiment.
Fig. 13 is a graph showing changes in driving force in assist control in the battery-assisted bicycle according to the second embodiment.

### DESCRIPTION OF THE EMBODIMENTS

Now, preferred embodiments will be described in conjunction with the accompanying drawings. It is noted that the elements in the drawings are neither drawn faithfully to their actual sizes nor to scale.

In the following description, forward, rearward, leftward, or rightward refer to these directions as seen by the rider holding a handle 23 and seated on a seat 24 of a battery-assisted bicycle 1.

### First Embodiment

### Overall Structure of Battery-assisted Bicycle

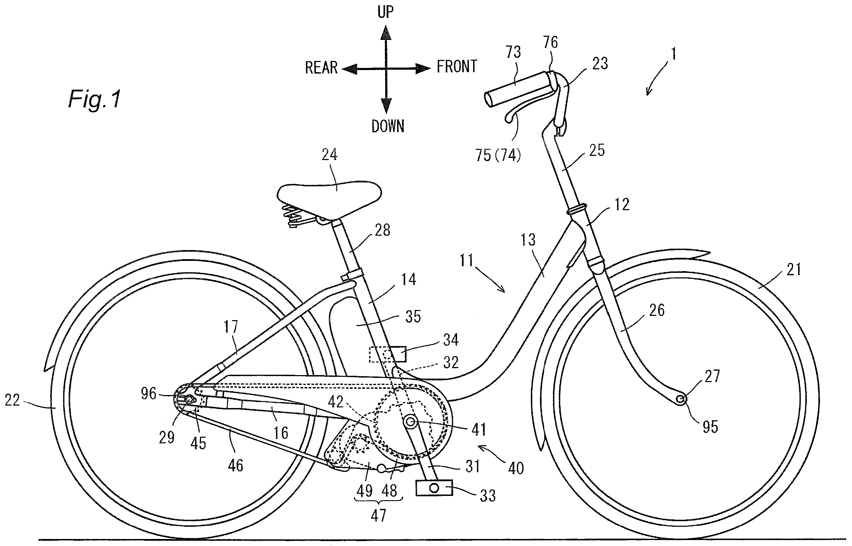

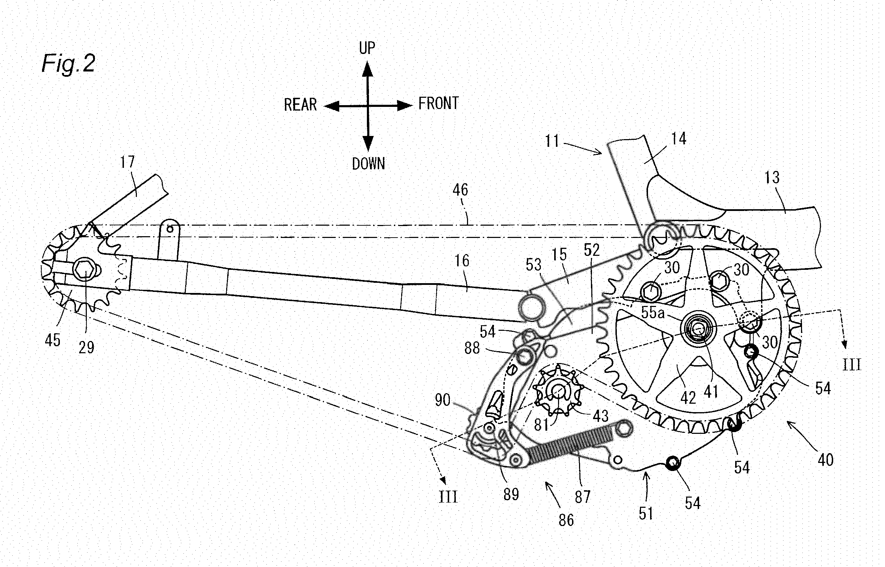

Fig. 1 is a right side view of a general structure of the battery-assisted bicycle 1 according to a first embodiment. Fig. 2 is a view of a general structure of a driving unit 40 and a driven sprocket 45 in the battery-assisted bicycle 1 according to the first embodiment.

As shown in Fig. 1, the battery-assisted bicycle 1 has a vehicle body frame 11. The vehicle body frame 11 extends in a front-back direction. The vehicle body frame 11 has a head pipe 12, a down frame 13, a seat frame 14, a pair of chain stays 16, and a pair of seat stays 17. The head pipe 12 is provided at a front part of the battery-assisted bicycle 1. The head pipe 12 is connected with a front end of the down frame 13. The down frame 13 extends in the front-back direction. The seat frame 14 is connected to a rear end of the down frame 13. The seat frame 14 extends upward and obliquely backward from the rear end of the down frame 13.

As shown in Fig. 2, a bracket 15 is attached to the rear end of the down frame 13. The pair of chain stays 16 is connected to a rear end of the bracket 15. The pair of chain stays 16 is provided to hold a rear wheel 22 from the left and right. As shown in Fig. 1, the rear end of each of the chain stays 16 is connected with one end of a seat stay 17. The pair of seat stays 17 is provided to hold the rear wheels 22 from the left and right. The other end of each of the seat stays 17 is connected to an upper end of the seat frame 14.

The head pipe 12 has a handle stem 25 rotatably inserted therein. A handle 23 is secured to an upper end of the handle stem 25. A front fork 26 is secured to a lower end of the handle stem 25. A front wheel 21 is rotatably supported by an axle 27 at a lower end of the front fork 26. The axle 27 is provided with a front wheel vehicle speed detector 95 that detects a vehicle speed from a rotation speed of the front wheel 21.

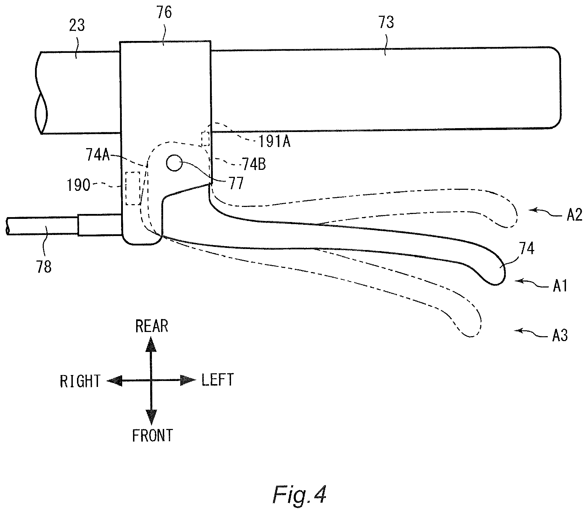

Grips 73 are attached to left and right ends of the handle 23. A left brake lever 74 is attached to a left part of the handle 23 and a right brake lever 75 is attached to a right part of the handle 23. The left brake lever 74 is used to operate a brake (not shown) for the rear wheel 22. The right brake lever 75 is used to operate a brake (not shown) for the front wheel 21. The left brake lever 74 is also used to operate an operation unit 190 (see Fig. 4) that will be described.

A seat pipe 28 is inserted in the cylindrical seat frame 14. The seat 24 is provided at an upper end of the seat pipe 28.

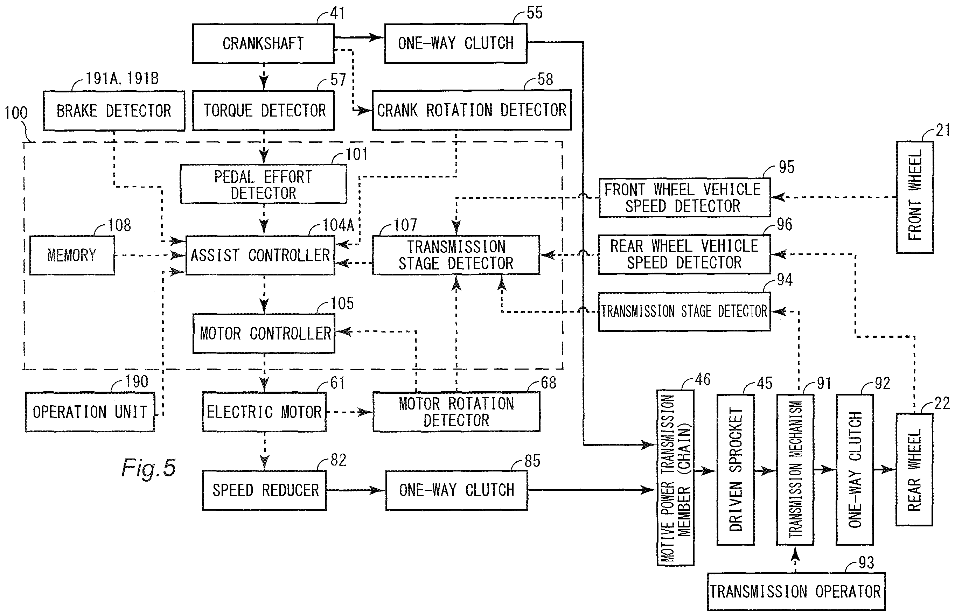

The rear wheel 22 is supported rotatably by an axle 29 at the rear ends of the pair of chain stays 16. The driven sprocket 45 is provided co-axially with the axle 29 at the right of the rear wheel 22. The driven sprocket 45 is coupled to the rear wheel 22 through a one-way clutch 92 (see Fig. 5). The driven sprocket 45 is provided with a rear wheel vehicle speed detector 96 that detects a vehicle speed from a rotation speed of the rear wheel 22.

A chain cover 47 is attached to the vehicle body frame 11. The chain cover 47 has a main cover 48 and a sub cover 49. The main cover 48 extends in the front-back direction. The main cover 48 covers a front right part of the driving unit 40 and the chain 46. The sub cover 49 covers a rear right part of the driving unit 40.

A battery unit 35 is provided behind the seat frame 14. The battery unit 35 supplies the electric motor 61 of the driving unit 40 with electric power. The battery unit 35 has a battery and a battery controller (not shown). The battery is a rechargeable battery. The battery controller controls charging/discharging to/from the battery and monitors for output current from the battery and its remaining capacity.

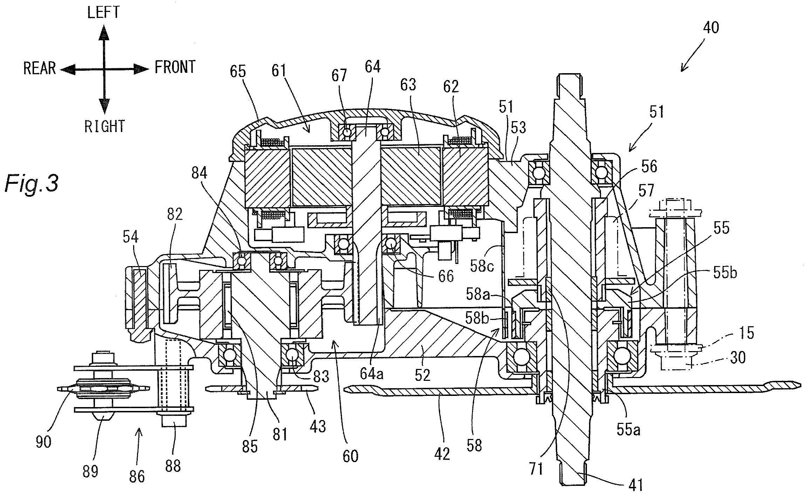

Fig. 3 is a sectional view of the driving unit 40 taken along III-III in Fig. 2. As shown in Fig. 3, the driving unit 40 has a main body part 51, a crankshaft 41, a driving force generator 60, a chain tensioner 86, and a controller 100 (see Fig. 1).

The main body part 51 has first and second cases 52 and 53. The first and second cases 52 and 53 are integrated with each other as the left and right parts and secured with each other by a plurality of metal fasteners 54. The main body part 51 is attached to the bracket 15 by a metal fastener 30.

The crankshaft 41 is provided through a front part of the main body part 51 in a left-right direction. The crankshaft 41 is supported rotatably to the main body part 51 through a plurality of bearings.

Crank arms 31 and 32 are provided at the ends of the crankshaft 41. Pedals 33 and 34 are attached to tip ends of the crank arms 31 and 32, respectively. As the user pushes the pedals 33 and 34 around, the crankshaft 41 rotates. A chain 46 is wound around a driving sprocket 42 and runs between the driving sprocket and the driven sprocket 45.

The crankshaft 41 is provided with a rotation member 56, a one-way clutch 55, and the driving sprocket 42 coaxially with the crankshaft 41. The rotation member 56 is provided in a center of the crankshaft 41 in the left-right direction. The rotation member 56 is substantially cylindrical. A right end of the rotation member 56 is supported by the crankshaft 41 through a cylindrical slide bearing 71. A left end of the rotation member 56 is connected to the crankshaft 41. The left end of the rotation member 56 and the crankshaft 41 are connected for example in a spline arrangement. In this way, the rotation member 56 rotates together with the crankshaft 41.

The one-way clutch 55 is provided at a right part of the crankshaft 41. The one-way clutch 55 has an inner member 55a and an outer member 55b.

The inner member 55a is provided at the right of the rotation member 56. The inner member 55a is substantially cylindrical and rotatable relative to the crankshaft 41. The driving sprocket 42 is attached at an outer circumferential surface of a right end of the inner member 55a.

The outer member 55b is provided to overlap a right part of the rotation member 56 and a left part of the inner member 55a. The outer member 55b is substantially cylindrical. The outer member 55b and the rotation member 56 are connected. The outer member 55b and the rotation member 56 are connected for example in a spline arrangement. In this way, the outer member 55b and the rotation member 56 are rotated together.

The outer member 55b and the inner member 55a are connected to transmit rotation force only in a forward rotation direction (clockwise as viewed from the right side of the battery-assisted bicycle 1 as shown in Fig. 1, which shall apply hereinafter) from the outer member 55b to the inner member 55a. The outer member 55b and the inner member 55a are connected for example in a ratchet arrangement. Rotation force in a backward rotation direction (anticlockwise as viewed from the right side of the battery-assisted bicycle 1 as shown in Fig. 1, which shall apply hereinafter) is not transmitted from the outer member 55b to the inner member 55a.

The crankshaft 41, the driving sprocket 42, the one-way clutch 55, and the rotation member 56 are arranged as described above. In this way, when the user pushes the pedals 33 and 34 around and rotates the crankshaft 41 in the forward rotation direction to advance the battery-assisted bicycle 1, the user's pedal effort is transmitted from the crankshaft 41 to the rotation member 56 and the outer member 55b. The forward rotation of the outer member 55b is transmitted to the inner member 55a. Therefore, the driving sprocket 42 attached to the inner member 55a rotates in the forward rotation direction. On the other hand, when the user rotates the crankshaft 41 in the backward rotation direction, the ratchet arrangement prevents the backward rotation from being transmitted from the outer member 55b to the inner member 55a. Therefore, the inner member 55a and the driving sprocket 42 are not rotated in the backward rotation direction.

The driving unit 40 is provided with a torque detector 57 and a crank rotation detector 58. The torque detector 57 detects torque generated at the crankshaft 41 by pedal effort. The torque detector 57 is for example a magnetostrictive torque sensor. When the torque detector 57 is a magnetostrictive torque sensor, the torque detector 57 has a coil provided opposed to an outer circumferential surface of the rotation member 56. The torque detector 57 detects distortion of the rotation member 56 as a change in voltage generated at the coil in order to detect the torque generated at the crankshaft 41. The torque detector 57 outputs a signal according to the detected torque to the controller 100.

The torque detector 57 may be any detector capable of detecting a pedal effort other than the magnetostrictive torque sensor. The torque detector 57 may detect the torque at the crankshaft 41 from tension generated at the chain 46 instead of directly detecting the torque at the crankshaft 41.

The crank rotation detector 58 detects the rotation of the crankshaft 41. The crank rotation detector 58 according to the embodiment detects the rotation of the crankshaft 41 based on the rotation of the outer member 55b of the one-way clutch 55. The crank rotation detector 58 has a magnet 58a and an encoder 58b. The magnet 58a is substantially cylindrical and provided on an outer circumferential surface of the outer member 55b. The encoder 58b is provided in a position opposed to an outer circumferential surface of the magnet 58a. The encoder 58b is supported by a resin support member 58c. As the outer member 55b rotates, a magnetic field by the magnet 58a changes, and the encoder 58b detects the change in the magnetic field. The crank rotation detector 58 outputs the change in the magnetic field as a pulse signal to the controller 100.

The driving force generator 60 is provided in a center of the main body part 51 in the front-back direction. The driving force generator 60 has the electric motor 61, an output shaft 81, and a gear 82.

The electric motor 61 generates assist driving force used to assist traveling of the battery-assisted bicycle 1 by a pedal effort in response to a control signal output from the controller 100. The electric motor 61 generates assist driving force used to assist the movement of the battery-assisted bicycle 1 with no pedal effort in response to a control signal output from the controller 100.

The electric motor 61 has a stator 62, a rotor 63, and a rotation shaft 64. The stator 62 is secured to the second case 53 of the main body part 51. The second case 53 is attached with a motor cover 65 that covers a left side part of the electric motor 61. The rotation shaft 64 is supported rotatably at the second case 53 and the motor cover 65 through rolling bearings 66 and 67. The rotor 63 is secured to the rotation shaft 64. A gear groove 64a is formed from a right end to a center at an outer circumference of the rotation shaft 64.

The electric motor 61 is provided with a motor rotation detector 68 (see Fig. 5). The motor rotation detector 68 detects the rotation of the rotor 63. The motor rotation detector 68 has an encoder used to detect the rotation of the rotor 63. The motor rotation detector 68 outputs a signal according to the detected rotation of the rotor 63 to the controller 100.

The output shaft 81 is provided behind the rotation shaft 64. The output shaft 81 is supported rotatably by a rolling bearing 83 provided at the first case 52 of the main body part 51 and a rolling bearing 84 provided at the second case 53 of the main body part 51.

The gear 82 is attached to the output shaft 81 through a one-way clutch 85. The gear 82 is provided coaxially with the output shaft 81 between the rolling bearings 83 and 84. The gear 82 engages with the gear groove 64a formed at the rotation shaft 64 of the electric motor 61. The gear groove 64a formed at the rotation shaft 64 and the gear 82 form a speed reducer 80. According to the embodiment, when the electric motor 61 is activated, the rotation shaft 64 rotates in the forward rotation direction. Therefore, the gear 82 rotates in the backward rotation direction by the forward rotation of the rotation shaft 64.

The one-way clutch 85 is configured to transmit only backward rotation generated at the gear 82 or the output shaft 81. Therefore, when the electric motor 61 is activated to rotate the gear 82 backward, the rotation is transmitted to the output shaft 81 and the output shaft 81 is rotated in the backward rotation direction. On the other hand, when the output shaft 81 rotates forward, the forward rotation is not transmitted to the gear 82.

An auxiliary sprocket 43 is provided at a right end of the output shaft 81. The auxiliary sprocket 43 and the output shaft 81 are connected for example in a spline arrangement. In this way, when the electric motor 61 is activated, the rotation of the rotation shaft 64 of the electric motor 61 is transmitted to the auxiliary sprocket 43 through the gear 82, the on-way clutch 85, and the output shaft 81. More specifically, assist driving force generated at the driving force generator 60 is transmitted from the output shaft 81 to the auxiliary sprocket 43, so that the auxiliary sprocket 43 is rotated in the backward rotation direction.

The chain tensioner 86 is provided at a rear part of the main body part 51. A tension sprocket 90 is attached to the chain tensioner 86 in a rotatable manner by a support bolt 89. As shown in Fig. 2, the chain tensioner 86 has one end connected rotatably to the first case 52 by a support bolt 88. The other end of the chain tensioner 86 is connected to the first case 52 through a tensile spring 87. The tension sprocket 90 has a chain 46 wound thereon so that the tension sprocket 90 is pushed backward. The chain tensioner 86 provides the chain 46 with appropriate tension by the elastic force of the tensile spring 87.

As shown in Fig. 2, in the battery-assisted bicycle 1 according to the embodiment, the driving sprocket 42 and the auxiliary sprocket 43 transmit driving force to the rear wheel 22 through the chain 46. More specifically, a pedal effort generated as the user pushes the pedals 33 and 34 rotates the driving sprocket 42 in the forward rotation direction and is transmitted as driving force to rotate the rear wheel 22 in the forward rotation direction through the chain 46. The rotation force generated by operation of the electric motor 61 rotates the auxiliary sprocket 43 in the backward rotation direction and is transmitted to the rear wheel 22 through the chain 46 as assist driving force to rotate the rear wheel 22 in the forward rotation direction. In this way, the pedal effort generated as the user pushes the pedals 33 and 34 are assisted by the driving force output from the electric motor 61.

The battery-assisted bicycle 1 activates the electric motor 61 under a prescribed condition when for example the user walks the battery-assisted bicycle 1 without riding the battery-assisted bicycle 1. The rotation force of the electric motor 61 is transmitted as assist driving force to rotate the rear wheel 22 forward through the chain 46 and assists the movement of the battery-assisted bicycle 1.

Note that the rotation of the chain 46 is transmitted to the rear wheel 22 through the driven sprocket 45, a transmission mechanism 91, and the one-way clutch 92 as shown in Fig. 5. The transmission mechanism 91 is operated by a transmission operator 93. The transmission operator 93 is provided for example at the handle 23.

The controller 100 controls the assist in the battery-assisted bicycle 1 by controlling the output of the electric motor 61. The controller 100 controls the output of the electric motor 61 that suits the user's pedal effort. The controller 100 controls the output of the electric motor 61 under a prescribed condition when there is no pedal effort by the user. The controller 100 can be provided for example near the electric motor 61 but the controller may be provided somewhere else.

Fig. 4 is an enlarged plan view of the left brake lever 74 attached to the handle 23. As shown in Fig. 4, the left brake lever 74 is attached at a left part of the handle 23 through a bracket 76. The left brake lever 74 is supported by a shaft 77 relative to the bracket 76. Therefore, the left brake lever 74 can move to position A1, A2 or A3 around the shaft 77. If the user operates the left brake lever 74 by the hand and moves the lever to position A2 or A3, the brake lever returns to position A1 by an elastic member that is not shown once the user lets go of the lever. A brake wire 78 is coupled to the left brake lever 74. When the left brake lever 74 is in position A1, the brake for the rear wheel 22 is not applied. When the left brake lever 74 is in position A2, the brake for the rear wheel 22 is applied through the brake wire 78. When the left brake lever 74 is in position A3, assist control that will be described is performed.

An operation unit 190 is provided at the right of the shaft 77 in the bracket 76. The operation unit 190 is for example a switch capable of switching between on and off states. The operation unit 190 turns on while pressing force is applied thereon and outputs an on state signal to the controller 100. The unit 190 turns off when the pressing force is not applied thereon and stops outputting the on state signal to the controller 100.

When the left brake lever 74 is in position A1 or A2, the right end 74A of the left brake lever 74 does not contact the operation unit 190. While the left brake lever 74 is in position A3, the right end 74A of the left brake lever 74 is in contact with the operation unit 190. Therefore, when the position of the left brake lever 74 is switched from position A1 or A2 to position A3, the operation unit 190 is switched from an off state to an on state. The operation unit 190 outputs an on state signal to the controller 100.

On the contrary, when the position of the left brake lever 74 is switched from position A3 to position A1 or A2, the operation unit 190 is switched from an on state to an off state. The operation unit 190 stops outputting the on state signal to the controller 100.

A brake detector 191A is provided at the left of the shaft 77 in the bracket 76. The brake detector 191 is for example a limit switch. While the brake lever 74 is in position A1 or A3, in other words, while the brake is not applied on the rear wheel 22 by the left brake lever 74, the left end 74B of the left brake lever 74 does not contact the brake detector 191A. While the left brake lever 74 in position A2, the left end 74B of the left brake lever 74 is in contact with the brake detector 191A. When the left end 74B of the left brake lever 74 contacts the brake detector 191A, the brake detector 191 outputs a detection signal to the controller 100.

Although not shown, a brake detector 191B that detects application of the brake on the front wheel 21 by the right brake lever 75 is attached to a right end of the handle 23. When the right brake lever 75 contacts the brake detector 191B, the brake detector 191B outputs a detection signal to the controller 100.

### Assist Control

Fig. 5 is a block diagram showing signal exchange and motive power transmission when assist control by the electric motor 61 is carried out in the battery-assisted bicycle 1. In Fig. 5, the signal exchange is indicated by the broken line arrow and the motive power transmission is indicated by the solid line arrow in the process of assist control. In Fig. 5, the same reference characters as those in Figs. 1 to 4 refer to the same elements in the battery-assisted bicycle 1.

In the following description, assist control carried out for example when the user walks the battery-assisted bicycle 1 without riding the battery-assisted bicycle 1, in other words, when the battery-assisted bicycle 1 moves with no pedal effort will be described. Assist control carried out when the battery-assisted bicycle 1 travels by a pedal effort will not be described.

As shown in Fig. 5, the controller 100 includes a pedal effort detector 101, a transmission stage detector 107, a memory 108, an assist controller 104A, and a motor controller 105.

The pedal effort detector 101 obtains a pedal effort made by the user based on torque at the crankshaft 41 detected by the torque detector 57.

The transmission stage detector 107 detects the present transmission stage based on the rotation speed of the electric motor 61 detected by the motor rotation detector 68 and the rotation speed of the rear wheel 22 detected by the rear wheel vehicle speed detector 96.

The memory 108 stores various programs carried out by the assist controller 104A and data.

The assist controller 104A calculates driving force by the electric motor 61 requested in carrying out the assist control while the battery-assisted bicycle moves with no pedal effort.

The motor controller 105 controls driving of the electric motor 61 so that the electric motor 61 outputs the necessary driving force calculated by the assist controller 104A. The motor controller 105 controls driving of the electric motor 61 in response to the rotation speed of the electric motor 61 detected by the motor rotation detector 68.

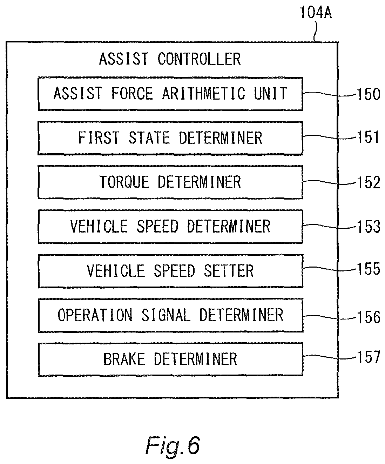

Fig. 6 is a view of a general configuration of an assist controller 104A in the battery-assisted bicycle 1 according to the first embodiment. As shown in Fig. 6, the assist controller 104A includes an assist force arithmetic unit 150, a first state determiner 151, a torque determiner 152, a vehicle speed determiner 153, a vehicle speed setter 155, an operation signal determiner 156, and a brake determiner 157.

The assist force arithmetic unit 150 produces driving force by the electric motor 61 using the various programs and data stored in the memory 108. More specifically, the driving force by the electric motor 61 is produced using feedback control so that a vehicle speed detected by the front wheel vehicle speed detector 95 is equal to a vehicle speed set by the vehicle speed setter 155 that will be described.

The first state determiner 151 determines whether the vehicle travel state of the battery-assisted bicycle 1 is in a first state. In the first state, the battery-assisted bicycle 1 has a vehicle speed with no pedal effort. More specifically, in the state, the user walks the battery-assisted bicycle 1 without riding the battery-assisted bicycle 1.

The torque determiner 152 determines whether torque detected by the torque detector 57 is equal to or less than a prescribed value. The prescribed value is set to a small value based on which it can be determined that the user does not push the pedals 33 and 34.

The vehicle speed determiner 153 determines whether the vehicle speed detected by the front wheel vehicle speed detector 95 is more than zero and equal to or less than a prescribed value. The prescribed value is set to a vehicle speed lower than normal vehicle speeds when the battery-assisted bicycle 1 travels by a pedal effort and is set a vehicle speed at which the user may walk the battery-assisted bicycle 1 without riding the battery-assisted bicycle 1. For example, the prescribed value can bet to 5km/h.

The operation signal determiner 156 determines whether a first operation signal or a second operation signal has been input from the operation unit 190.

More specifically, as shown in Fig. 4, when the operation unit 190 is switched by the left brake lever 74 from an off state to an on state and an on state signal is input from the operation unit 190, the operation signal determiner 156 determines that the first operation signal has been input from the operation unit 190. When the operation unit 190 is switched from an on state to an off state by the left brake lever 74 and the on state signal is no longer input from the operation unit 190, the operation signal determiner determines that the second operation signal has been input from the operation unit 190.

If the first state determiner 151 determines that the battery-assisted bicycle 1 is in the first state and the first operation signal is input from the operation unit 190, the vehicle speed setter 155 sets a detection result from the front wheel vehicle detector 95 at the time of input of the first operation signal as a second vehicle speed. The vehicle speed setter 155 sets a third vehicle speed higher than the second vehicle speed. If the second operation signal is input from the operation unit 190 after the first operation signal is input, a detection result from the front wheel vehicle speed detector 95 at the time of input of the second operation signal is set as a first vehicle speed. The third vehicle speed higher than the second vehicle speed is set by the vehicle speed setter 155 in order to accelerate the battery-assisted bicycle 1 in the assist control while the battery-assisted bicycle 1 is in the first state.

The brake determiner 157 determines whether the brake for the front wheel 21 or the rear wheel 22 is applied based on a detection result from the brake detector 191.

More specifically, as shown in Fig. 4, when the left brake lever 74 is operated to apply the brake for the rear wheel 22, the left end 74B of the left brake lever 74 contacts the brake detector 191A and the brake detector 191A outputs a detection signal to the controller 100. The brake determiner 157 determines that the brake for the rear wheel 22 is applied in response to the signal input from the brake detector 191A. When the brake for the front wheel 21 is applied by operating the right brake lever 75, the right brake lever 75 contacts the brake detector 191B and the brake detector 191B outputs a detection signal to the controller 100. The brake determiner 157 determines that the brake for the front wheel 21 is applied in response to the signal input from the brake detector 191B.

### Assist Control Flow

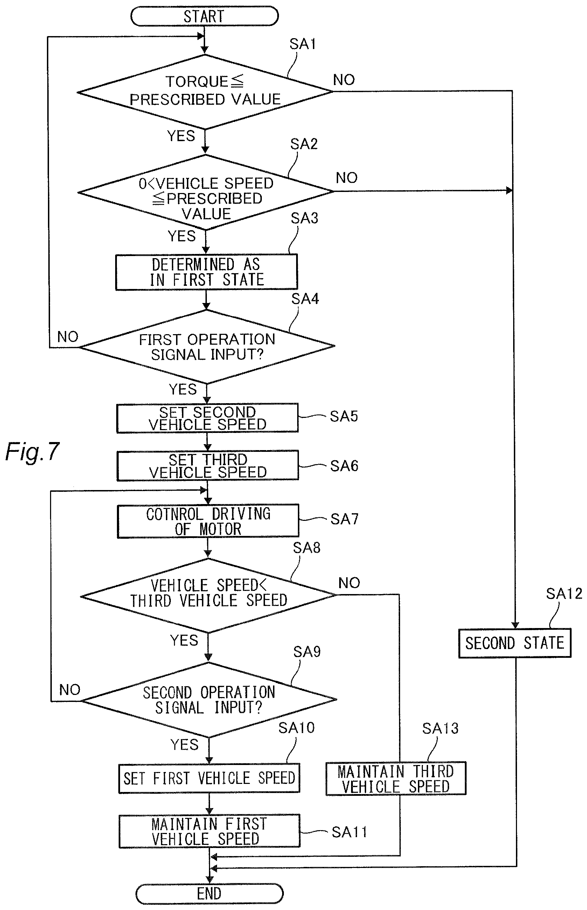

Fig. 7 is a flowchart for illustrating the assist control in the battery-assisted bicycle 1 according to the first embodiment. The assist control carried out to assist the movement of the battery-assisted bicycle 1 while the battery-assisted bicycle 1 is moved with no pedal effort will be described by referring to the flow in Fig. 7.

As the assist control flow as shown in Fig. 7 starts (START), the torque determiner 152 determines in step SA1 whether torque detected by the torque detector 57 is equal to or less than the prescribed value.

If the torque determiner 152 determines that the torque is equal to or less than the prescribed value (YES), the control proceeds to step SA2.

If it is determined in step SA1 that the torque is more than the prescribed value (NO), the control proceeds to step SA12, and it is determined that the battery-assisted bicycle 1 is not in the first state (in which case the battery-assisted bicycle 1 travels for example by pedaling; hereinafter the state will be referred to as the "second state"), and the flow ends (END).

In step SA2, the vehicle speed determiner 153 determines whether a vehicle speed detected by the front wheel vehicle speed detector 95 is more than zero and equal to or less than the prescribed value (5 km/h for example).

If it is determined in step SA2 that the vehicle speed is more than zero and equal to or less than the prescribed value (YES), the control proceeds to step SA3 and the first state determiner 151 determines that the battery-assisted bicycle 1 is in the first state.

If it is determined in step SA2 that the vehicle speed is more than the prescribed value (NO), the control proceeds to step SA12, in which it is determined that the battery-assisted bicycle 1 is in the second state and not in the first state (for example when the user rides the battery-assisted bicycle 1 and travels without pedaling) and the flow ends (END).

If it is determined in step SA3 that the battery-assisted bicycle 1 is in the first state and then the operation signal determiner 156 determines in step SA4 whether the first operation signal has been input from the operation unit 190.

If it is determined in step SA4 that the first operation signal has been input from the operation unit 190 (YES), the control proceeds to step SA5.

If it is determined in step SA4 that the operation signal has not been input from the operation unit 190 (NO), the control returns to step SA1 and determination of whether the battery-assisted bicycle 1 is in the first state is resumed.

In step SA5, the vehicle speed setter 155 sets a vehicle speed at the time of input of the operation signal as a second vehicle speed. In step SA6, the vehicle speed setter 155 sets a third vehicle speed higher than the second vehicle speed. The control then proceeds to step SA7 after step SA6.

In step SA7, the assist force arithmetic unit 150 produces driving force by the electric motor 61 so that the vehicle speed of the battery-assisted bicycle 1 changes from the second vehicle speed to the third vehicle speed.

More specifically, the assist force arithmetic unit 150 produces driving force by the electric motor 61 using feedback control so that the vehicle speed of the battery-assisted bicycle 1 detected by the front wheel vehicle speed detector 95 changes from the second vehicle speed to the third vehicle speed. The motor controller 105 controls driving of the electric motor 61 so that the electric motor 61 outputs the driving force produced by the assist force arithmetic unit 150.

Note that after the vehicle speed of the battery-assisted bicycle 1 reaches the third vehicle speed, the assist force arithmetic unit 150 produces driving force by the electric motor 61 using feedback control so that the vehicle speed of the battery-assisted bicycle 1 is maintained at the third vehicle speed.

In step SA8, the vehicle speed determiner 153 determines whether a vehicle speed detected by the front wheel vehicle speed detector 95 is less than the third vehicle speed.

If it is determined in step SA8 that the vehicle speed detected by the front wheel vehicle speed detector 95 is less than the third vehicle speed (YES), the control proceeds to step SA9.

If it is determined in step SA8 that the vehicle speed detected by the front wheel vehicle speed detector 95 is not less than the third vehicle speed, in other words, if it is determined that the vehicle speed has reached the third speed (NO), the control proceeds to step SA13, the vehicle speed of the battery-assisted bicycle 1 is maintained at the third vehicle speed and the flow ends (END).

In step SA9, the operation signal determiner 156 determines whether the second operation signal has been input from the operation unit 190.

If it is determined in step SA9 that the second operation signal has been input from the operation unit 190 (YES), the control proceeds to step SA10 and the vehicle speed setter 155 sets a vehicle speed at the time of input of the second operation signal as a first vehicle speed.

If it is determined in step SA9 that the second operation signal has not been input from the operation unit 190 (NO), the control returns to step SA7 and the assist force arithmetic unit 150 produces driving force by the electric motor 61 so that the vehicle speed of the battery-assisted bicycle 1 changes to the third vehicle speed. The motor controller 105 controls driving of the electric motor 61 so that the electric motor 61 outputs the driving force produced by the assist force arithmetic unit 150.

In step SA10, the vehicle speed setter 155 sets a vehicle speed at the time of input of the second operation signal as the first vehicle speed, then the vehicle speed of the battery-assisted bicycle 1 is maintained at the first vehicle speed in step SA11 and the flow ends (END).

In step SA11, if the vehicle speed of the battery-assisted bicycle 1 is maintained at the first vehicle speed, the assist force arithmetic unit 150 produces driving force by the electric motor 61 using feedback control so that the vehicle speed of the battery-assisted bicycle 1 is maintained at the first vehicle speed. The motor controller 105 controls driving of the electric motor 61 so that the electric motor 61 outputs the driving force produced by the assist force arithmetic unit 150.

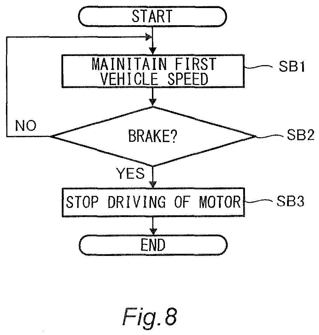

Fig. 8 is a flowchart for illustrating assist control when the brake is applied in the battery-assisted bicycle 1 according to the first embodiment. Assist control carried out while the vehicle speed of the battery-assisted bicycle 1 is maintained at the first vehicle speed and the brake is applied will be described by referring to the flow shown in Fig. 8

As shown in Fig. 8, as the assist control flow starts (START), the vehicle speed of the battery-assisted bicycle 1 is maintained at the first vehicle speed in step SB1.

The brake determiner 157 determines in step SB2 whether the brake has been applied based on detection results from the brake detectors 191A and 191B.

If it is determined in step SB2 that the brake has been applied (YES), the control proceeds to step SB3. In step SB3, driving force by the electric motor 61 is produced so that driving of the electric motor 61 is stopped. The motor controller 105 controls driving of the electric motor 61 so that the electric motor 61 outputs the driving force produced by the assist force arithmetic unit 150.

On the other hand, if it is determined in step SB2 that the brake has not been applied (NO), the control returns to step SB1 and the vehicle speed of the battery-assisted bicycle 1 is maintained at the first vehicle speed.

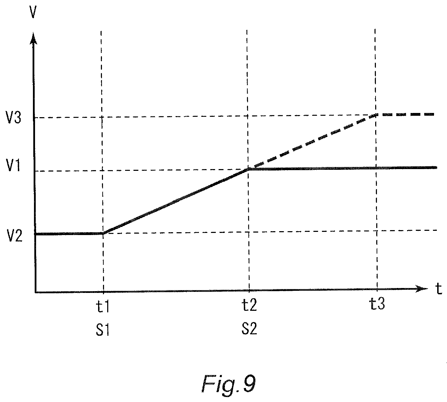

Fig. 9 is a graph showing changes in the vehicle speed in the assist control in the battery-assisted bicycle 1 according to the first embodiment. The abscissa represents time t and the ordinate represents vehicle speed V. Assume that at time t1, the first state determiner 151 determines that the battery-assisted bicycle 1 is in the first state and a first operation signal S1 is input from the operation unit 190. The vehicle speed at time t1 corresponding to the input of the operation signal is set as a second vehicle speed V2 by the vehicle speed setter 155. After setting the second vehicle speed V2, the vehicle speed setter 155 sets a third vehicle speed V3 higher than the second vehicle speed V2. In the assist control according to the embodiment, driving force by the electric motor 61 is controlled so that the vehicle speed of the battery-assisted bicycle 1 changes from the second vehicle speed V2 to the third vehicle speed V3 during the period from time t1 corresponding to the input of the first operation signal to time t3. The acceleration of the battery-assisted bicycle 1 is set to a constant value.

Assume that a second operation signal S2 is input from the operation unit 190 at time t2 before the vehicle speed of the battery-assisted bicycle 1 reaches the vehicle speed V3. The vehicle speed setter 155 sets the vehicle speed at time t2 corresponding to the input of the operation signal as the first vehicle speed V1. At time t2 corresponding to the input of the second operation signal S2 from the operation unit 190 and thereafter, the vehicle speed of the battery-assisted bicycle 1 is maintained at the first vehicle speed V1 (the solid line in the graph). The relation among the first vehicle speed V1, the second vehicle speed V2, and the third vehicle speed V3 can be expressed as V2≤V1≤V3.

On the other hand, if the second operation signal S2 is not input from the operation unit 190 during the period from time t1 to t3 in which the vehicle speed of the battery-assisted bicycle 1 changes from the second vehicle speed V2 to the third vehicle speed V3, the vehicle speed of the battery-assisted bicycle 1 reaches the third vehicle speed V3 at time t3 and is thereafter maintained at the third vehicle speed V3 (the broken line in the graph).

### Advantages of First Embodiment

According to the embodiment, the operation unit 190 is operated when the battery-assisted bicycle 1 is in the first state, so that the vehicle speed at the time of the operation of the operation unit 190 is maintained thereafter. Therefore, when the user walks the battery-assisted bicycle 1 without riding the battery-assisted bicycle 1, assist can be carried out that suits the user's preference without increasing the number of times of operating the operation unit 190. Moreover, if the battery-assisted bicycle 1 is in the first state when the operation unit 190 is operated, the vehicle speed at the time of the input of the operation signal is maintained thereafter regardless of whether the assist is carried out.

According to the embodiment, the operation unit 190 is operated once while the battery-assisted bicycle 1 is in the first state, so that the vehicle speed increases from the second vehicle speed to the third vehicle speed from the time of operation of the operation unit 190. The operation unit 190 is operated once again as the vehicle speed increases, so that the first vehicle speed, i.e., the vehicle speed at the time of operation is maintained. Therefore, when the user walks the battery-assisted bicycle 1 without riding the battery-assisted bicycle 1, assist can be carried out that suits the user's preference by operating the operation unit 190 twice.

### Second Embodiment

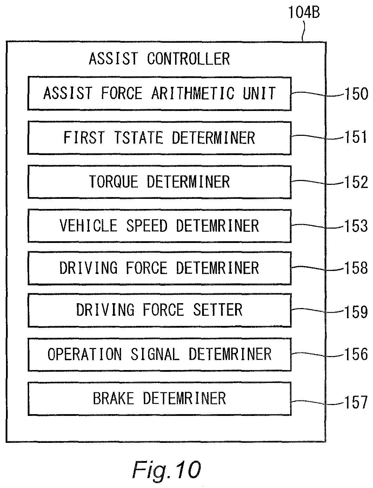

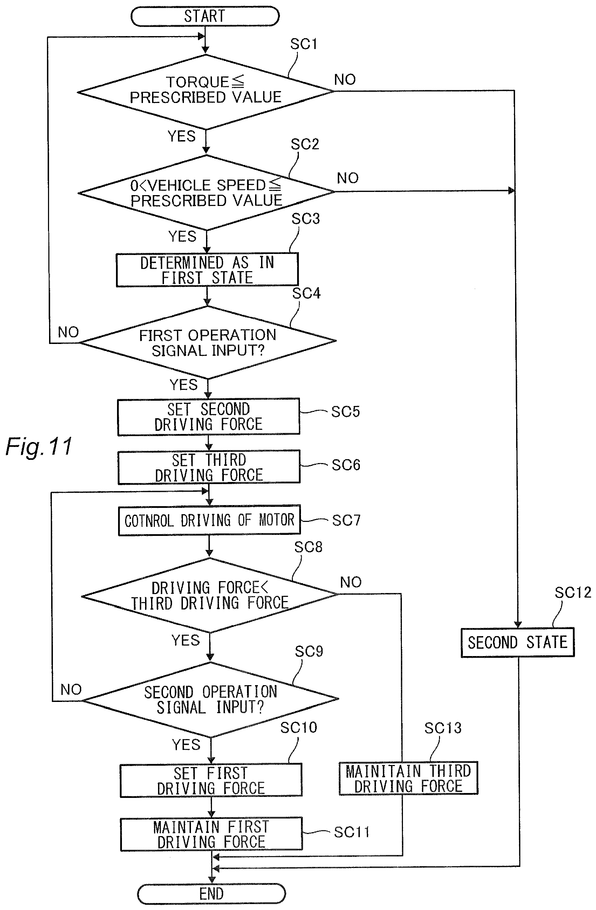

Fig. 10 is a block diagram of a general configuration of the assist controller 104B in the battery-assisted bicycle 1 according to a second embodiment. Fig. 11 is a flowchart for illustrating the assist control in the battery-assisted bicycle 1 according to the second embodiment. The assist control flow according to the second embodiment is different from the assist control flow according to the first embodiment in that a driving force setter 159 sets first, second, and third driving force. In the following description, the same elements as those according to the first embodiment will be designated by the same reference characters and will not be described while only different elements from the first embodiment will be described.

Steps SC1 to SC4 and SC12 in the assist control flow shown in Fig. 11 are the same as steps SA1 to SA4 and SA12 in the assist control flow shown in Fig. 7 according to the first embodiment. Therefore, steps SC1 to SC4 and SC12 will not be described in detail.

As shown in Fig. 10, the assist controller 104B includes an assist force arithmetic unit 150, a first state determiner 151, a torque determiner 152, a vehicle speed determiner 153, a driving force determiner 158, the driving force setter 159, an operation signal determiner 156, and a brake determiner 157.

If the first state determiner 151 determines that the battery-assisted bicycle 1 is in the first state and a first operation signal is input from the operation unit 190, the driving force setter 159 sets driving force by the embodiment 61 at the time of input of the first operation signal as the second driving force. The driving force setter 159 sets the third driving force more than the second driving force. If a second operation signal is input from the operation unit 190 after the first operation signal is input, the driving force by the electric motor 61 at the time of input of the second operation signal is set as the first driving force. The driving force setter 159 sets the third driving force more than the second driving force in order to increase the driving force by the battery-assisted bicycle 1 in the assist control.

The driving force determiner 158 determines whether the driving force by the electric motor 61 is less than the third driving force.

### Assist Control Flow

Now, the assist control carried out to assist the movement of the battery-assisted bicycle 1 while the battery-assisted bicycle 1 is moved with no pedal effort will be described by referring to the flow in Fig. 11.

As the assist control flow as shown in Fig. 11 starts (START), steps SC1 to SC4 are carried out. In the following step SC5, the driving force setter 159 sets driving force at the time of input of an operation signal as the second driving force. In the following step SC6, the driving force setter 159 sets the third driving force more than the second driving force.

In step SC7, the assist force arithmetic unit 150 produces driving force by the electric motor 61 so that the driving force by the battery-assisted bicycle 1 changes from the second driving force to the third driving force. The motor controller 105 controls driving of the electric motor 61 so that the electric motor 61 outputs the driving force produced by the assist force arithmetic unit 150.

Note that the assist force arithmetic unit 150 keeps the driving force by the battery-assisted bicycle 1 at the third driving force after the driving force by the battery-assisted bicycle 1 reaches the third driving force.

In step SC8, the driving force determiner 158 determines whether the driving force by the electric motor 61 is less than the third driving force.

If it is determined in step SC8 that the driving force by electric motor 61 is less than the third driving force (YES), the control proceeds to step SC9.

On the other hand, if it is determined in step SC8 that the driving force by the electric motor 61 is not less than the third driving force, in other words, it is determined that the driving force has reached the third driving force (NO), the control proceeds to step SC13, the driving force by the electric motor 61 is maintained at the third driving force and the flow ends (END).

In step SC9, the operation signal determiner 156 determines whether the second operation signal has been input from the operation unit 190.

If it is determined in step SC9 that the second signal has been input from the operation unit 190 (YES), the control proceeds to step SC10 and the driving force setter 159 sets the driving force at the time of input of the second operation signal as the first driving force.

On the other hand, if it is determined in step SC9 that the second operation signal has not been input from the operation unit 190 (NO), the control returns to step SC7 and the assist force arithmetic unit 150 produces driving force by the electric motor 61 so that the driving force by the battery-assisted bicycle 1 changes to the third driving force. The motor controller 105 controls driving of the electric motor 61 so that the electric motor 61 outputs the driving force produced by the assist arithmetic unit 150.

In step SC10 the driving force setter 159 sets the driving force at the time of input of the second operation signal as the first driving force. Then in step SC11, the driving force by the battery-assisted bicycle 1 is maintained at the first driving force and the flow ends (END).

If the driving force by the battery-assisted bicycle 1 is maintained at the first driving force in step SC11, the assist force arithmetic unit 150 maintains the driving force by the battery-assisted bicycle 1 at the first driving force, and the motor controller 105 controls driving of the electric motor 61 so that the electric motor 61 outputs the first driving force.

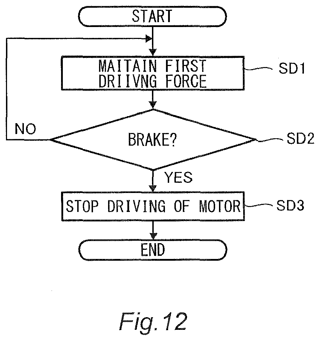

Fig. 12 is a flowchart for illustrating the assist control when the brake is applied in the battery-assisted bicycle 1 according to the second embodiment. The assist control carried out when the brake is applied while the driving force by the battery-assisted bicycle 1 is maintained at the first driving force will be described by referring to the flow in Fig. 12.

As shown in Fig. 12, as the assist control flow starts (START), the driving force by the battery-assisted bicycle 1 is maintained at the first driving force in step SD1.

In step SD2, the brake determiner 157 determines whether the brake has been applied based on detection results from the brake detectors 191A and 191B.

If it is determined in step SD2 that the brake has been applied (YES), the control proceeds to step SD3. In step SD3, the driving force by the electric motor 61 is produced so that driving of the electric motor 61 is stopped. The motor controller 105 controls driving of the electric motor 61 so that the electric motor 61 outputs the driving force produced by the assist force arithmetic unit 150.

On the other hand, if it is determined in step SD2 that the brake has not been applied (NO), the control returns to step SD1 and the driving force by the battery-assisted bicycle 1 is maintained at the first driving force.

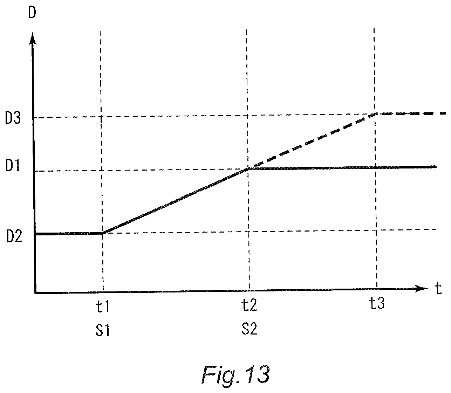

Fig. 13 is a graph showing changes in the driving force in the assist control in the battery-assisted bicycle 1 according to the first embodiment. The abscissa represents time t and the ordinate represents driving force D. Assume that at time t1, the first state determiner 151 determines that the battery-assisted bicycle 1 is in the first state and a first operation signal S1 is input from the operation unit 190. The driving force setter 159 sets the driving force at time t1 corresponding to the input of the operation signal as second driving force D2. After setting the second driving force D2, the driving force setter 159 sets third driving force D3 more than the second driving force D2. Assume that the driving force by the electric motor 61 is controlled in the assist control according to the second embodiment so that during the period from time t1 corresponding to the input of the first operation signal to time t3, the driving force by the battery-assisted bicycle 1 changes from the second driving force D2 to the third driving force D3. The change rate in the driving force by the battery-assisted bicycle 1 is set to a constant value.

Assume that at time t2 before the driving force by the battery-assisted bicycle 1 reaches the third driving force D3, a second operation signal S2 is input from the operation unit 190. The driving force setter 159 sets driving force at time t2 corresponding to the input of the operation signal as first driving force D1. At time t2 corresponding to the input of the second operation signal S2 from the operation unit 190 and thereafter, the driving force by the battery-assisted bicycle 1 is maintained at the first driving force D1 (the solid line in the graph). The relation among the first driving force D1, the second driving force D2, and the third driving force D3 can be represented as D2≤D1≤D3.

On the other hand, if the second operation signal S2 is not input from the operation unit 190 during the period from time t1 to t3 in which the driving force by the battery-assisted bicycle 1 changes from the second driving force D2 to the third driving force D3, the driving force by the battery-assisted bicycle 1 reaches the third driving force D3 at time t3 and is thereafter maintained at the third driving force D3 (the broken line in the graph).

### Advantages of Second Embodiment

According to the embodiment, when the user walks the battery-assisted bicycle 1 without riding the battery-assisted bicycle 1, assist can be carried out that suits the user's preference without increasing the number of times of operating the operation unit 190.

According to the embodiment, the operation unit 190 is operated once while the battery-assisted bicycle 1 is in the first state, so that the driving force increases from the second driving force to the third driving force at the time of operation of the operation unit 190 and thereafter. The operation unit 190 is operated once again while the driving force increases, so that the first driving force, i.e., the driving force at the time of operation is maintained. Therefore, when the user walks the battery-assisted bicycle 1 without riding the battery-assisted bicycle 1, assist can be carried out that suits the user's preference by operating the operation unit 190 twice.

According to the first embodiment, the vehicle speed is maintained at the first vehicle speed V1 when the second operation signal S2 is input from the operation unit 190, but this may be otherwise. If the battery-assisted bicycle 1 is in the first state when the first operation signal S1 is input from the operation unit 190, assist may be carried out so that the vehicle speed at the time of input of the operation signal may be maintained thereafter regardless of whether the assist is performed.

According to the embodiment, the first state determiner determines that the first state is attained if a pedal effort is equal to or less than a prescribed value and the vehicle speed is equal to or lower than a prescribed value based on detection results from the torque determiner 152

## Claims

1. A battery-assisted bicycle configured to assist by driving force by an electric motor (61), comprising:
the electric motor (61);
a vehicle speed detector (95,96) configured to detect a vehicle speed of the bicycle;
a first state determiner (151) configured to determine whether the battery-assisted bicycle is in a first state, the battery-assisted bicycle having the vehicle speed with no pedal effort and a user walks the battery-assisted bicycle without riding the battery-assisted bicycle in the first state;
the operation unit (190) is configured to switchably output one of first and second operation signals,
if the first state determiner (151) determines that the battery-assisted bicycle is in the first state and the first operation signal is input from the operation unit (190), the vehicle speed setter (155) is configured to set a detection result from the vehicle speed detector (95,96) at the time of input of the first operation signal as a second vehicle speed, and to set a third vehicle speed higher than the second vehicle speed, and a detection result from the vehicle speed detector (95,96) at time of input of the second operation signal as the first vehicle speed when the second operation signal is input from the operation unit (190) after input of the first operation signal, and
if the first state determiner (151) determines that the battery-assisted bicycle is in the first state and the first operation signal is input from the operation unit (190), the motor controller (105) is configured to control driving of the electric motor (61) so that the vehicle speed is increased from the second vehicle speed to the third vehicle speed after input of the first operation signal, and so that the first vehicle speed is maintained after input of the second operation signal when the second operation signal is input from the operation unit (190) after input of the first operation signal.

2. A battery-assisted bicycle configured to assist by driving force by an electric motor (61), comprising:
the electric motor (61);
a vehicle speed detector (95,96) configured to detect a vehicle speed of the bicycle;
a first state determiner (151) configured to determine whether the battery-assisted bicycle is in a first state, the battery-assisted bicycle having the vehicle speed with no pedal effort and a user walks the battery-assisted bicycle without riding the battery-assisted bicycle in the first state;
the operation unit (190) is configured to switchably output one of first and second operation signals,
if the first state determiner (151) determines that the battery-assisted bicycle is in the first state and the first operation signal is input from the operation unit (190), the driving force setter (159) is configured to set driving force by the electric motor (61) at the time of input of the first operation signal as second driving force, third driving force more than the second driving force, and driving force by the electric motor (61) at time of input of the second operation signal as the first driving force when the second operation signal is input from the operation unit (190) after input of the first operation signal,
if the first state determiner (151) determines that the battery-assisted bicycle is in the first state and the first operation signal is input from the operation unit (190), the motor controller (105) is configured to control driving of the electric motor (61) so that the driving force is increased from the second driving force to the third driving force after input of the first operation signal and so that the first driving force is output after input of the second operation signal when the second operation signal is input from the operation unit (190) after input of the first operation signal.

3. A battery-assisted bicycle according to claim 1 or 2, wherein the first state determiner (151) is configured to determine that no pedal effort is made if the pedal effort is equal to or less than a prescribed value and the vehicle speed is equal to or less than a prescribed value based on detection results from the torque detector (57) and the vehicle speed detector (95,96).

4. A battery-assisted bicycle according to claim 1 or 2, further comprising:
a seat pressure determiner configured to determine whether the pressure detected by the seat pressure detector is equal to or less than a prescribed value, wherein the first state determiner (151) is configured to determine that a person is not riding the bicycle if the seat pressure determiner determines that the pressure applied on the seating surface of the seat (24) is equal to or less than the prescribed value.

5. A method for operating a battery-assisted bicycle assist by driving force by an electric motor (61), comprising:
detecting a vehicle speed of the bicycle by a vehicle speed detector (95,96);
determining whether the battery-assisted bicycle is in a first state, the battery-assisted bicycle having the vehicle speed with no pedal effort and a user walks the battery-assisted bicycle without riding the battery-assisted bicycle in the first state;
switchably outputting one of first and second operation signals,
if determining that the battery-assisted bicycle is in the first state and the first operation signal is input, setting a detection result from the vehicle speed detector (95,96) at the time of input of the first operation signal as a second vehicle speed, a third vehicle speed higher than the second vehicle speed, and a detection result from the vehicle speed detector (95,96) at time of input of the second operation signal as the first vehicle speed when the second operation signal is input after input of the first operation signal, and if determining that the battery-assisted bicycle is in the first state and the first operation signal is input, controlling driving of the electric motor (61) so that the vehicle speed is increased from the second vehicle speed to the third vehicle speed after input of the first operation signal, and so that the first vehicle speed is maintained after input of the second operation signal when the second operation signal is input from the operation unit (190) after input of the first operation signal.

6. A method for operating a battery-assisted bicycle assist by driving force by an electric motor (61), comprising:
detecting a vehicle speed of the bicycle by a vehicle speed detector (95,96);
determining whether the battery-assisted bicycle is in a first state, the battery-assisted bicycle having the vehicle speed with no pedal effort and a user walks the battery-assisted bicycle without riding the battery-assisted bicycle in the first state;
switchably outputting one of first and second operation signals,
if determining that the battery-assisted bicycle is in the first state and the first operation signal is input, setting driving force by the electric motor (61) at the time of input of the first operation signal as second driving force, third driving force more than the second driving force, and driving force by the electric motor (61) at time of input of the second operation signal as the first driving force when the second operation signal is input after input of the first operation signal, and
if determining that the battery-assisted bicycle is in the first state and the first operation signal is input, controlling driving of the electric motor (61) so that the driving force is increased from the second driving force to the third driving force after input of the first operation signal and so that the first driving force is output after input of the second operation signal when the second operation signal is input after input of the first operation signal.

7. A method for operating a battery-assisted bicycle according to claim 5 or 6, further comprising:
determining that no pedal effort is made if the pedal effort is equal to or less than a prescribed value and the vehicle speed is equal to or less than a prescribed value based on detected torque and vehicle speed.

8. A method for operating a battery-assisted bicycle according to claim 5 or 6, further comprising:
determining whether the detected pressure is equal to or less than a prescribed value, determining that a person is not riding the bicycle if the pressure applied on the seating surface of the seat (24) is equal to or less than the prescribed value.

## Patentansprüche

1. Ein batterieunterstütztes Fahrrad, das konfiguriert ist, um durch die Antriebskraft eines Elektromotors (61) zu unterstützen, das umfasst:
den Elektromotor (61);
einen Fahrzeuggeschwindigkeitsdetektor (95, 96), der konfiguriert ist, um eine Fahrzeuggeschwindigkeit des Fahrrads zu erfassen;
einen Erster-Zustand-Bestimmer (151), der konfiguriert ist, um zu bestimmen, ob sich das batterieunterstützte Fahrrad in einem ersten Zustand befindet, das batterieunterstützte Fahrrad, das die Fahrzeuggeschwindigkeit ohne Pedalkraft hat und ein Benutzer geht mit dem batterieunterstützten Fahrrad, ohne das batterieunterstützte Fahrrad zu fahren, in dem ersten Zustand;
die Betriebseinheit (190) ist konfiguriert, um schaltbar ein erstes oder ein zweites Betriebssignal auszugeben,
wenn der Erster-Zustand-Bestimmer (151) bestimmt, dass das batterieunterstützte Fahrrad in dem ersten Zustand ist und das erste Betriebssignal von der Betriebseinheit (190) eingegeben wird, ist der Fahrzeuggeschwindigkeitseinsteller (155) konfiguriert, um ein Erfassungsergebnis von dem Fahrzeuggeschwindigkeitsdetektor (95, 96) zum Zeitpunkt der Eingabe des ersten Betriebssignals als eine zweite Fahrzeuggeschwindigkeit einzustellen, und um eine dritte Fahrzeuggeschwindigkeit, die höher ist als die zweite Fahrzeuggeschwindigkeit, und ein Erfassungsergebnis von dem Fahrzeuggeschwindigkeitsdetektor (95, 96) zum Zeitpunkt der Eingabe des zweiten Betriebssignals als die erste Fahrzeuggeschwindigkeit, wenn das zweite Betriebssignal von der Betriebseinheit (190) nach der Eingabe des ersten Betriebssignals eingegeben wird, einzustellen, und
wenn der Erster-Zustand-Bestimmer (151) bestimmt, dass das batterieunterstützte Fahrrad in dem ersten Zustand ist und das erste Betriebssignal von der Betriebseinheit (190) eingegeben wird, ist die Motorsteuerung (105) konfiguriert, um den Antrieb des Elektromotors (61) zu steuern, so dass die Fahrzeuggeschwindigkeit von der zweiten Fahrzeuggeschwindigkeit auf die dritte Fahrzeuggeschwindigkeit nach Eingabe des ersten Betriebssignals erhöht wird, und so dass die erste Fahrzeuggeschwindigkeit nach Eingabe des zweiten Betriebssignals beibehalten wird, wenn das zweite Betriebssignal von der Betriebseinheit (190) nach Eingabe des ersten Betriebssignals eingegeben wird.

2. Ein batterieunterstütztes Fahrrad, das konfiguriert ist, um durch die Antriebskraft eines Elektromotors (61) zu unterstützen, das umfasst:
den Elektromotor (61);
einen Fahrzeuggeschwindigkeitsdetektor (95, 96), der konfiguriert ist, um eine Fahrzeuggeschwindigkeit des Fahrrads zu erfassen;
einen Erster-Zustand-Bestimmer (151), der konfiguriert ist, um zu bestimmen, ob sich das batterieunterstützte Fahrrad in einem ersten Zustand befindet, das batterieunterstützte Fahrrad, das die Fahrzeuggeschwindigkeit ohne Pedalkraft hat und ein Benutzer geht mit dem batterieunterstützten Fahrrad, ohne das batterieunterstützte Fahrrad zu fahren, in dem ersten Zustand;
die Betriebseinheit (190) ist konfiguriert, um schaltbar ein erstes oder ein zweites Betriebssignal auszugeben,
wenn der Erster-Zustand-Bestimmer (151) bestimmt, dass das batterieunterstützte Fahrrad in dem ersten Zustand ist und das erste Betriebssignal von der Betriebseinheit (190) eingegeben wird, ist der Antriebskrafteinsteller (159) konfiguriert, um die Antriebskraft durch den Elektromotor (61) zum Zeitpunkt der Eingabe des ersten Betriebssignals als zweite Antriebskraft, eine dritte Antriebskraft, die größer als die zweite Antriebskraft ist, und die Antriebskraft durch den Elektromotor (61) zum Zeitpunkt der Eingabe des zweiten Betriebssignals als die erste Antriebskraft, wenn das zweite Betriebssignal von der Betriebseinheit (190) nach Eingabe des ersten Betriebssignals eingegeben wird, einzustellen,
wenn der Erster-Zustand-Bestimmer (151) bestimmt, dass das batterieunterstützte Fahrrad in dem ersten Zustand ist und das erste Betriebssignal von der Betriebseinheit (190) eingegeben wird, ist die Motorsteuerung (105) konfiguriert, um den Antrieb des Elektromotors (61) zu steuern, so dass die Antriebskraft von der zweiten Antriebskraft auf die dritte Antriebskraft nach Eingabe des ersten Betriebssignals erhöht wird, und so dass die erste Antriebskraft nach Eingabe des zweiten Betriebssignals ausgegeben wird, wenn das zweite Betriebssignal von der Betriebseinheit (190) nach Eingabe des ersten Betriebssignals eingegeben wird.

3. Ein batterieunterstütztes Fahrrad gemäß Anspruch 1 oder 2, wobei der Erster-Zustand-Bestimmer (151) konfiguriert ist, um zu bestimmen, dass keine Pedalkraft ausgeübt ist, wenn die Pedalkraft gleich oder kleiner als ein vorgeschriebener Wert ist und die Fahrzeuggeschwindigkeit gleich oder kleiner als ein vorgeschriebener Wert ist, auf der Grundlage von Erfassungsergebnissen von dem Drehmomentdetektor (57) und dem Fahrzeuggeschwindigkeitsdetektor (95, 96).

4. Ein batterieunterstütztes Fahrrad gemäß Anspruch 1 oder 2, das weiterhin umfasst:
einem Sitz-Druck-Bestimmer, der konfiguriert ist, um zu bestimmen, ob der Druck, der durch den Sitzdruckdetektor erfasst ist, gleich oder kleiner als ein vorgeschriebener Wert ist, wobei der Erster-Zustand-Bestimmer (151) konfiguriert ist, um zu bestimmen, dass ein Benutzer das Fahrrad nicht fährt, wenn der Sitz-Druck-Bestimmer bestimmt, dass der Druck, der auf die Sitzoberfläche des Sitzes (24) ausgeübte ist, gleich oder kleiner als der vorgeschriebene Wert ist.

5. Ein Verfahren zum Betreiben eines batterieunterstützten Fahrrads mit Antriebskraft durch einen Elektromotor (61), das umfasst:
Erfassen einer Fahrzeuggeschwindigkeit des Fahrrads durch einen Fahrzeuggeschwindigkeitsdetektor (95, 96);
Bestimmen, ob sich das batterieunterstützte Fahrrad in einem ersten Zustand befindet, das batterieunterstützte Fahrrad hat die Fahrzeuggeschwindigkeit ohne Pedalkraft und ein Benutzer geht mit dem batterieunterstützten Fahrrad, ohne das batterieunterstützte Fahrrad zu fahren, in dem ersten Zustand;
die schaltbare Ausgabe eines von ersten und zweiten Betriebssignalen,
wenn festgestellt wird, dass das batterieunterstützte Fahrrad in dem ersten Zustand ist und das erste Betätigungssignal eingegeben wird, Festlegen eines Erfassungsergebnisses von dem Fahrzeuggeschwindigkeitsdetektor (95, 96) zum Zeitpunkt der Eingabe des ersten Betätigungssignals als eine zweite Fahrzeuggeschwindigkeit, einer dritten Fahrzeuggeschwindigkeit, die höher als die zweite Fahrzeuggeschwindigkeit ist, und eines Erfassungsergebnisses von dem Fahrzeuggeschwindigkeitsdetektor (95, 96) zum Zeitpunkt der Eingabe des zweiten Betätigungssignals als die erste Fahrzeuggeschwindigkeit, wenn das zweite Betätigungssignal nach der Eingabe des ersten Betätigungssignals eingegeben wird,
und
wenn festgestellt wird, dass das batterieunterstützte Fahrrad im ersten Zustand ist und das erste Betriebssignal eingegeben wird, Steuern des Antriebs des Elektromotors (61), so dass die Fahrzeuggeschwindigkeit von der zweiten Fahrzeuggeschwindigkeit auf die dritte Fahrzeuggeschwindigkeit nach Eingabe des ersten Betriebssignals erhöht wird, und so dass die erste Fahrzeuggeschwindigkeit nach Eingabe des zweiten Betriebssignals beibehalten wird, wenn das zweite Betriebssignal von der Betriebseinheit (190) nach Eingabe des ersten Betriebssignals eingegeben wird.

6. Ein Verfahren zum Betreiben eines batterieunterstützten Fahrrads mit Antriebskraft durch einen Elektromotor (61), das umfasst:
Erfassen einer Fahrzeuggeschwindigkeit des Fahrrads durch einen Fahrzeuggeschwindigkeitsdetektor (95, 96);
Bestimmen, ob sich das batterieunterstützte Fahrrad in einem ersten Zustand befindet, das batterieunterstützte Fahrrad hat die Fahrzeuggeschwindigkeit ohne Pedalkraft und ein Benutzer geht mit dem batterieunterstützten Fahrrad, ohne das batterieunterstützte Fahrrad zu fahren, in dem ersten Zustand;
die schaltbare Ausgabe eines von ersten und zweiten Betriebssignalen,
wenn festgestellt wird, dass das batterieunterstützte Fahrrad im ersten Zustand ist und das erste Betriebssignal eingegeben wird, Einstellen der Antriebskraft durch den Elektromotor (61) zum Zeitpunkt der Eingabe des ersten Betriebssignals als zweite Antriebskraft, einer dritten Antriebskraft, die größer ist als die zweite Antriebskraft, und der Antriebskraft durch den Elektromotor (61) zum Zeitpunkt der Eingabe des zweiten Betriebssignals als die erste Antriebskraft, wenn das zweite Betriebssignal nach der Eingabe des ersten Betriebssignals eingegeben wird, und
wenn festgestellt wird, dass das batterieunterstützte Fahrrad im ersten Zustand ist und das erste Betriebssignal eingegeben wird, Steuerung des Antriebs des Elektromotors (61), so dass die Antriebskraft von der zweiten Antriebskraft auf die dritte Antriebskraft nach Eingabe des ersten Betriebssignals erhöht wird und so dass die erste Antriebskraft nach Eingabe des zweiten Betriebssignals ausgegeben wird, wenn das zweite Betriebssignal nach Eingabe des ersten Betriebssignals eingegeben wird.

7. Ein Verfahren zum Betreiben eines batterieunterstützten Fahrrads gemäß Anspruch 5 oder 6, das weiterhin umfasst:
Bestimmen, dass keine Pedalkraft ausgeübt ist, wenn die Pedalkraft gleich oder kleiner als ein vorgeschriebener Wert ist und die Fahrzeuggeschwindigkeit gleich oder kleiner als ein vorgeschriebener Wert ist, auf der Grundlage von erfassten Drehmoment und der Fahrzeuggeschwindigkeit.

8. Ein Verfahren zum Betreiben eines batterieunterstützten Fahrrads gemäß Anspruch 5 oder 6, das weiterhin umfasst:
Bestimmung, ob der ermittelte Druck gleich oder kleiner als ein vorgeschriebener Wert ist,
Feststellung, dass ein Benutzer das Fahrrad nicht fährt, wenn der Druck, der auf die Sitzfläche des Sitzes (24) ausgeübt ist, gleich oder kleiner als der vorgeschriebene Wert ist.

## Revendications

1. Bicyclette assistée par batterie configurée pour fournir une assistance grâce à une force d'entraînement produite par un moteur électrique (61), comprenant :
le moteur électrique (61),
un détecteur de vitesse de véhicule (95, 96) configuré pour détecter la vitesse de véhicule de la bicyclette,
un dispositif de détermination de premier état (151) configuré pour déterminer si la bicyclette assistée par batterie se trouve dans un premier état, la bicyclette assistée par batterie ayant une vitesse de véhicule sans effort sur les pédales et l'utilisateur faisant avancer la bicyclette assistée par batterie sans monter sur la bicyclette assistée par batterie dans le premier état,
l'unité de fonctionnement (190), qui est configurée pour délivrer par commutation l'un d'un premier et d'un second signal de fonctionnement,
si le dispositif de détermination de premier état (151) définit que la bicyclette assistée par batterie se trouve dans le premier état et que le premier signal de fonctionnement est appliqué en entrée par l'unité de fonctionnement (190), le dispositif de réglage de vitesse de véhicule (155) est configuré pour établir un résultat de détection à partir du détecteur de vitesse de véhicule (95, 96) à l'instant de l'application en entrée du premier signal de fonctionnement en tant que deuxième vitesse de véhicule, et pour établir une troisième vitesse de véhicule supérieure à la deuxième vitesse de véhicule, ainsi qu'un résultat de détection à partir du détecteur de vitesse de véhicule (95, 96) à l'instant de l'application en entrée du second signal de fonctionnement en tant que première vitesse de véhicule lorsque le second signal de fonctionnement est appliqué en entrée par l'unité de fonctionnement (190) après l'application en entrée du premier signal de fonctionnement, et
si le dispositif de détermination de premier état (151) définit que la bicyclette assistée par batterie se trouve dans le premier état et que le premier signal de fonctionnement est appliqué en entrée par l'unité de fonctionnement (190), le contrôleur de moteur (105) est configuré pour commander l'entraînement du moteur électrique (61) de sorte à augmenter la vitesse de véhicule de la deuxième vitesse de véhicule à la troisième vitesse de véhicule après l'application en entrée du premier signal de fonctionnement, et de sorte à maintenir la première vitesse de véhicule après l'application en entrée du second signal de fonctionnement lorsque le second signal de fonctionnement est appliqué en entrée par l'unité de fonctionnement (190) après l'application en entrée du premier signal de fonctionnement.

2. Bicyclette assistée par batterie configurée pour fournir une assistance grâce à une force d'entraînement produite par un moteur électrique (61), comprenant :
le moteur électrique (61),
un détecteur de vitesse de véhicule (95, 96) configuré pour détecter la vitesse de véhicule de la bicyclette,
un dispositif de détermination de premier état (151) configuré pour déterminer si la bicyclette assistée par batterie se trouve dans un premier état, la bicyclette assistée par batterie ayant une vitesse de véhicule sans effort sur les pédales et l'utilisateur faisant avancer la bicyclette assistée par batterie sans monter sur la bicyclette assistée par batterie dans le premier état,
l'unité de fonctionnement (190), qui est configurée pour délivrer par commutation l'un d'un premier et d'un second signal de fonctionnement,
si le dispositif de détermination de premier état (151) définit que la bicyclette assistée par batterie se trouve dans le premier état et que le premier signal de fonctionnement est appliqué en entrée par l'unité de fonctionnement (190), le dispositif de réglage de force d'entraînement (159) est configuré pour établir la force d'entraînement par le moteur électrique (61) à l'instant de l'application en entrée du premier signal de fonctionnement en tant que deuxième force d'entraînement, et pour établir une troisième force d'entraînement supérieure à la deuxième force d'entraînement, ainsi qu'une force d'entraînement par le moteur électrique (61) à l'instant de l'application en entrée du second signal de fonctionnement en tant que première force d'entraînement lorsque le second signal de fonctionnement est appliqué en entrée par l'unité de fonctionnement (190) après l'application en entrée du premier signal de fonctionnement,
si le dispositif de détermination de premier état (151) définit que la bicyclette assistée par batterie se trouve dans le premier état et que le premier signal de fonctionnement est appliqué en entrée par l'unité de fonctionnement (190), le contrôleur de moteur (105) est configuré pour commander l'entraînement du moteur électrique (61) de sorte à augmenter la force d'entraînement de la deuxième force d'entraînement à la troisième force d'entraînement après l'application en entrée du premier signal de fonctionnement, et de sorte à délivrer la première force d'entraînement après l'application en entrée du second signal de fonctionnement lorsque le second signal de fonctionnement est appliqué en entrée par l'unité de fonctionnement (190) après l'application en entrée du premier signal de fonctionnement.

3. Bicyclette assistée par batterie selon la revendication 1 ou la revendication 2, dans lequel le dispositif de détermination de premier état (151) est configuré pour définir qu'aucun effort sur les pédales n'est effectué si l'effort sur les pédales est inférieur ou égal à une valeur prescrite et que la vitesse de véhicule est inférieure ou égale à une valeur prescrite sur la base de résultats de détection provenant du détecteur de couple (57) et du détecteur de vitesse de véhicule (95, 96).

4. Bicyclette assistée par batterie selon la revendication 1 ou la revendication 2, comprenant en outre :
un dispositif de détermination de pression de siège configuré pour définir si la pression détectée par le détecteur de pression de siège est inférieure ou égale à une valeur prescrite, le dispositif de détermination de premier état (151) étant configuré pour déterminer que la personne n'est pas montée sur la bicyclette si le dispositif de détermination de pression de siège définit que la pression appliquée sur la surface d'assise du siège (24) est inférieure ou égale à la valeur prescrite.

5. Procédé de mise en œuvre d'une bicyclette assistée par batterie et départ une force d'entraînement produite par un moteur électrique (61), comprenant :
la détection de la vitesse de véhicule de la bicyclette par un détecteur de vitesse de véhicule (95, 96),
la détermination de ce que la bicyclette assistée par batterie se trouve dans un premier état, la bicyclette assistée par batterie ayant une vitesse de véhicule sans effort sur les pédales et l'utilisateur faisant avancer la bicyclette assistée par batterie sans monter sur la bicyclette assistée par batterie dans le premier état,
la délivrance par commutation de l'un d'un premier et d'un second signal de fonctionnement,
s'il est déterminé que la bicyclette assistée par batterie se trouve dans le premier état et que le premier signal de fonctionnement est appliqué en entrée, l'établissement d'un résultat de détection à partir du détecteur de vitesse de véhicule (95, 96) à l'instant de l'application en entrée du premier signal de fonctionnement en tant que deuxième vitesse de véhicule, et l'établissement d'une troisième vitesse de véhicule supérieure à la deuxième vitesse de véhicule, ainsi que d'un résultat de détection à partir du détecteur de vitesse de véhicule (95, 96) à l'instant de l'application en entrée du second signal de fonctionnement en tant que première vitesse de véhicule lorsque le second signal de fonctionnement est appliqué en entrée après l'application en entrée du premier signal de fonctionnement, et
s'il est déterminé que la bicyclette assistée par batterie se trouve dans le premier état et que le premier signal de fonctionnement est appliqué en entrée, la commande de l'entraînement du moteur électrique (61) de sorte à augmenter la vitesse de véhicule de la deuxième vitesse de véhicule à la troisième vitesse de véhicule après l'application en entrée du premier signal de fonctionnement, et de sorte à maintenir la première vitesse de véhicule après l'application en entrée du second signal de fonctionnement lorsque le second signal de fonctionnement est appliqué en entrée après l'application en entrée du premier signal de fonctionnement.

6. Procédé de mise en œuvre d'une bicyclette assistée par batterie et départ une force d'entraînement produite par un moteur électrique (61), comprenant :
la détection de la vitesse de véhicule de la bicyclette par un détecteur de vitesse de véhicule (95, 96),
la détermination de ce que la bicyclette assistée par batterie se trouve dans un premier état, la bicyclette assistée par batterie ayant une vitesse de véhicule sans effort sur les pédales et l'utilisateur faisant avancer la bicyclette assistée par batterie sans monter sur la bicyclette assistée par batterie dans le premier état,
la délivrance par commutation de l'un d'un premier et d'un second signal de fonctionnement,
s'il est déterminé que la bicyclette assistée par batterie se trouve dans le premier état et que le premier signal de fonctionnement est appliqué en entrée, l'établissement de la force d'entraînement par le moteur électrique (61) à l'instant de l'application en entrée du premier signal de fonctionnement en tant que deuxième force d'entraînement, et l'établissement d'une troisième force d'entraînement supérieure à la deuxième force d'entraînement, ainsi que d'une force d'entraînement par le moteur électrique (61) à l'instant de l'application en entrée du second signal de fonctionnement en tant que première force d'entraînement lorsque le second signal de fonctionnement est appliqué en entrée après l'application en entrée du premier signal de fonctionnement,
s'il est déterminé que la bicyclette assistée par batterie se trouve dans le premier état et que le premier signal de fonctionnement est appliqué en entrée, la commande de l'entraînement du moteur électrique (61) de sorte à augmenter la force d'entraînement de la deuxième force d'entraînement à la troisième force d'entraînement après l'application en entrée du premier signal de fonctionnement, et de sorte à délivrer la première force d'entraînement après l'application en entrée du second signal de fonctionnement lorsque le second signal de fonctionnement est appliqué en entrée par l'unité de fonctionnement (190) après l'application en entrée du premier signal de fonctionnement.

7. Procédé de mise en œuvre d'une bicyclette assistée par batterie selon la revendication 5 ou la revendication 6, comprenant en outre :
la détermination de ce qu'aucun effort sur les pédales n'est effectué si l'effort sur les pédales est inférieur ou égal à une valeur prescrite et que la vitesse de véhicule est inférieure ou égale à une valeur prescrite sur la base du couple et de la vitesse de véhicule détectés.

8. Procédé de mise en œuvre d'une bicyclette assistée par batterie selon la revendication 5 ou la revendication 6, comprenant en outre :
la détermination de ce que la pression détectée est inférieure ou égale à une valeur prescrite,
la détermination de ce que la personne n'est pas montée sur la bicyclette si la pression appliquée sur la surface d'assise du siège (24) est inférieure ou égale à la valeur prescrite.
